# EUROPEAN PATENT SPECIFICATION

(11) **EP 3 978 336 B1**
(45) Date of publication and mention of the grant of the patent: **10.09.2025**
(21) Application number: 20836570.0
(22) Date of filing: 09.07.2020
(51) Int. Cl.: B62D 25/20, B62D 25/04, B60R 16/02, B62D 21/15

(54) **VEHICLE BODY STRUCTURE AND VEHICLE**
FAHRZEUGKAROSSERIESTRUKTUR UND FAHRZEUG
STRUCTURE DE CARROSSERIE DE VÉHICULE ET VÉHICULE

(30) Priority: 10.07.2019 CN 201910621125
(43) Date of publication of application: 06.04.2022
(73) Proprietor: Great Wall Motor Company Limited, Baoding, Hebei 071000 (CN)
(72) Inventor: SUN, Qinyu, Baoding, Hebei 071000 (CN); HUANG, Yigang, Baoding, Hebei 071000 (CN); WEI, Chaoyue, Baoding, Hebei 071000 (CN); YU, Dianlun, Baoding, Hebei 071000 (CN); GAO, Fengwu, Baoding, Hebei 071000 (CN); SHI, Qingyuan, Baoding, Hebei 071000 (CN); LIU, Hao, Baoding, Hebei 071000 (CN); WEI, Ying, Baoding, Hebei 071000 (CN); CHEN, Chuan, Baoding, Hebei 071000 (CN); WANG, Changqing, Baoding, Hebei 071000 (CN); YANG, Shiyin, Baoding, Hebei 071000 (CN); SUN, Qinchao, Baoding, Hebei 071000 (CN); TENG, Yanqing, Baoding, Hebei 071000 (CN)
(74) Representative: dompatent von Kreisler Selting Werner - Partnerschaft von Patent- und Rechtsanwälten mbB
(86) International application number: PCT/CN2020/101012
(87) International publication number: WO 2021/004497

(56) References cited:
- EP-A1- 1 251 061
- CN-A- 109 941 348
- CN-A- 109 941 348
- CN-U- 202 624 374
- CN-U- 202 624 374
- CN-U- 206 086 904
- CN-U- 208 602 570
- CN-U- 208 602 570
- DE-A1- 10 332 634
- DE-B3- 102010 064 591
- FR-A1- 2 895 356
- KR-A- 20180 051 850
- US-A1- 2002 180 244
- US-A1- 2015 069 778

## Description

The present application claims the priority of the Chinese patent application filed on July 10th, 2019 filed to the Chinese Patent Office with the application number of 201910621125.9 and the title of "VEHICLE BODY STRUCTURE AND VEHICLE".

### TECHNICAL FIELD

The present application relates to the technical field of vehicles, and more particularly, to a vehicle body structure and vehicle.

### BACKGROUND

At present, most of the vehicles sold in the market are of five-door vehicles (also known as four-door hatch), such as ordinary cars and SUVs. In addition to the five-door vehicles, there are also some three-door vehicles (also known as two-door hatch), such as some small cars or limousines. In a body structure of a vehicle, a front crossbeam of rear floor is generally disposed at the rear part of the vehicle, and the front crossbeam of rear floor is mostly formed by a front crossbeam of rear floor body and a front crossbeam of rear floor cover plate no matter the vehicle is a five-door vehicle or a three-door vehicle, and some of the vehicles may further disposed a stiffening plate structure. The front crossbeam of rear floor formed by the above structure may be used as a channel, to transfer the impact force to the other side of the vehicle when a side collision happens to the vehicle, thus achieving the effects of reducing the collision intrusion and ensuring the safety of passengers.

However, the design of the present front crossbeam of rear floor has the following disadvantages in practical application:

Firstly, when a side collision happens to a vehicle, the impact force will be decomposed several times in a transfer path of the present front crossbeam of rear floor, resulting in that the impact force cannot be effectively transferred, and a considerable part of the impact force will be absorbed by the floor during the decomposition process of the collision force, which will easily hurt passengers.

Secondly, the existing production process of the front crossbeam of rear floor is complex and highly cost, and is not conducive to the weight reduction of the vehicle body because the present front crossbeam of rear floor is generally stamped with plates having equal thickness.

Thirdly, in the present three-door vehicle, there is a problem of large height drop of the rear floor, which leads to large forming depth of the rear floor, and the production process is complex and highly cost.

US 2015/069778 A1 describes a vehicle body lower structure includes a gadget that couples a cross member and a center pillar to each other. The gadget of US 2015/069778 A1 has a first extension portion that is extended along a vertical direction, and a second extension portion that is extended from an upper end of the first extension portion toward a center axis of the center pillar, and is connected to the center pillar in the vehicle width direction. In US 2015/069778 A1, a ridgeline that extends from the cross member toward the center pillar is formed between the first extension portion and the second extension portion. In US 2015/069778 A1, the first extension portion is located only at one of a vehicle body front side of the center pillar and a vehicle body rear side of the center pillar. The second extension portion, in US 2015/069778 A1, is extended at least from the upper end of the first extension portion to the center axis of the center pillar.

### SUMMARY

In light of this, the present application aims at providing a vehicle body structure in order to overcome at least one shortcoming in the prior art.

The present invention is defined in claim 1.

To achieve one of the above objects, the technical solutions of the present application are implemented as follows.

A vehicle body structure has a front crossbeam of rear floor located at a rear part of the vehicle body, two longitudinal beams of rear floor located below the front crossbeam of rear floor and symmetrically disposed on both sides of the vehicle body, and two B-pillars symmetrically disposed on both sides of the vehicle body and respectively aligned with end parts of the front crossbeam of rear floor; meanwhile, both ends of the front crossbeam of rear floor are fixedly connected with the two longitudinal beams of rear floor and the two B-pillars respectively.

Further, both ends of the front crossbeam of rear floor are fixedly connected with a connecting plate respectively, and the front crossbeam of rear floor is fixedly connected with the longitudinal beams of rear floor and the B-pillars through the connecting plates.

Further, preferably, the connecting plate is connected with an inner plate of the rear floor longitudinal beam in the rear floor longitudinal beam.

Further, the connecting plate is connected with a B pillar stiffening plate in the B pillar.

Further, a supporting part fixedly connected with the connecting plate and aligned with the front crossbeam of rear floor is fixedly connected in the B pillar stiffening plate.

Further, the supporting part has an annular cross section, and comprises an upper supporting plate and a lower supporting plate which are fastened and fixedly connected together, and at least one end of at least one of the upper supporting plates and the lower supporting plate is provided with an outward/inward flanging.

Further, preferably, the front crossbeam of rear floor is located above a rear floor in the vehicle body.

Further, preferably, the front crossbeam of rear floor comprises a front crossbeam body and a front crossbeam cover plate fixedly connected with the crossbeam body, and a cavity is enclosed between the front crossbeam body and the front crossbeam cover plate due to the fixed connection, and the cavity extends along a lengthwise direction of the front crossbeam of rear floor.

Further, preferably, crossbeam stiffening plates built in the cavity are fixedly connected with both ends of the front crossbeam of rear floor respectively, and a cross section of the front crossbeam stiffening plate is the same as that of the front crossbeam body, both of which are similar to an n shape with two outward flanging.

Further, preferably, the front crossbeam body comprises end plate bodies located at both ends, and a middle plate body fixedly connected between the end plate bodies at both ends by laser tailor welding, a thickness of the middle plate body is smaller than that of the end plate bodies, and the front crossbeam stiffening plate is fixedly connected with the end plate bodies.

The embodiments of the present application also disclose a vehicle, comprising the vehicle body structure mentioned above.

Compared with the prior art, the present application has the following advantages.

The vehicle body structure and the vehicle body of the present application are disposed by means of aligning the front crossbeam of rear floor with the B-pillars on both sides and causing the front crossbeam of rear floor and the B-pillars and the longitudinal beams of rear floor to be fixedly connected together; if the vehicle has a side collision, the impact force is directly transmitted to the other side of the vehicle body by means of the front crossbeam of rear floor, thus reducing the decomposition of the impact force during the process of transferring, effectively transferring the impact force and reducing the absorption of the impact force by the floor, and thus reducing injury to passengers and protecting the safety of the passengers.

The above description is only a summary of the technical solutions of the present application. To understand the technical means of the present application more clearly so that the present application can be implemented according to the contents of the specification, and to make one of the above and other objects, features and advantages of the present application more obvious and understandable, the specific embodiments of the present application are specially illustrated hereinafter.

### BRIEF DESCRIPTION OF THE DRAWINGS

In order to illustrate the technical solutions of the embodiments of the present application or in the related art more clearly, the drawings used in the description of the embodiments or the prior art will be briefly described below. Obviously, the drawings in the following description are merely some embodiments of the present application.

The drawings constituting a part of the application are used to provide a further understanding of the application, and the illustrative embodiments of the application and the description thereof serve to explain the application, and do not constitute any inappropriate definition to the application. In the drawings:
FIG. 1 is a schematic diagram of a vehicle body structure according to an embodiment of the present application;
FIG. 2 is a schematic diagram of connections between the front crossbeam of rear floor and the left and right B-pillar stiffening plates, and left and right rear floor longitudinal beams according to the embodiment of the present application;
FIG. 3 is an exploded view of FIG. 2;
FIG. 4 is a schematic structural diagram of the left B-pillar stiffening plate according to the embodiment of the present application;
FIG. 5 is a schematic structural diagram of the right B-pillar stiffening plate according to the embodiment of the present application;
FIG. 6 is a schematic structural diagram of the left B-pillar stiffening plate according to the embodiment of the present application from another perspective;
FIG. 7 is a schematic structural diagram of the upper supporting plate of the left B-pillar according to the embodiment of the present application;
FIG. 8 is a schematic structural diagram of the upper supporting plate of the left B-pillar according to the embodiment of the present application from another perspective;
FIG. 9 is a schematic structural diagram of the low supporting plates of the left B pillar according to the embodiment of the present application;
FIG. 10 is a schematic structural diagram of the lower supporting plate of the left B-pillar according to the embodiment of the present application from another perspective;
FIG. 11 is a partial enlarged view of part A in FIG. 4;
FIG. 12 is a schematic structural diagram of the inner plate of the left rear floor longitudinal beam according to the embodiment of the present application;
FIG. 13 is a schematic structural diagram of the inner plate of the left rear floor longitudinal beam according to the embodiment of the present application from another perspective;
FIG. 14 is a schematic structural diagram of the left connecting plate according to the embodiment of the present application;
FIG. 15 is a schematic structural diagram of the front crossbeam of rear floor according to the embodiment of the present application;
FIG. 16 is a front view of FIG. 15;
FIG. 17 is a left view of FIG. 16;
FIG. 18 is a right view of FIG. 16;
FIG. 19 is an exploded view of FIG. 15;
FIG. 20 is a sectional view of the front crossbeam of rear floor according to the embodiment of the present application;
FIG. 21 is a schematic diagram showing wall thicknesses of parts a and b in the front crossbeam of rear floor according to the embodiment of the present application; and
FIG. 22 is a schematic diagram showing relative position arrangement of the front crossbeam of rear floor and the rear floor according to the embodiment of the present application.

Description of Reference Numerals:
100 refers to front crossbeam of rear floor 101 front crossbeam body, 102 refers to front crossbeam cover plate, 103 refers to front crossbeam left stiffening plate, and 104 refers to front crossbeam right reinforcing plate;
200 refers to left B pillar stiffening plate, 201 refers to B pillar stiffening plate body, 202 refers to upper supporting plate, and 203 refers to lower supporting plate;
300 refers to right B pillar stiffening plate;
401 refers to inner plate of left rear floor longitudinal beam, and 402 refers to left connecting plate;
501 refers to inner plate of right rear floor longitudinal beam, and 502 refers to right connecting plate; and
601 refers to rear floor.

### DETAILED DESCRIPTION

In order to make one of the objects, the technical solutions and the advantages of the embodiments of the present application clearer, the technical solutions of the embodiments of the present application will be clearly and completely described below with reference to the drawings of the embodiments of the present application. Apparently, the described embodiments are merely certain embodiments of the present application, rather than all of the embodiments. Based on the embodiments of the present application, all other embodiments obtained by those of ordinary skills in the art without going through any creative effort shall fall within the scope of protection of the present application.

It should be noted that, in case of no conflict, the embodiments in the application and the features in the embodiments may be combined with each other.

The present application will be explained in detail with reference to the drawings and embodiments hereinafter.

This embodiment relates to a vehicle body structure. The vehicle body structure is applicable to the present five-door vehicle or three-door vehicle which is widely used. The effect of facilitating may be achieved by means of using the vehicle body structure according to this embodiment, which is conductive to transfer the impact force of a collision to the other side of the vehicle body when the side collision happens to the vehicle with the body structure, to better protect the safety of passengers in the carriage.

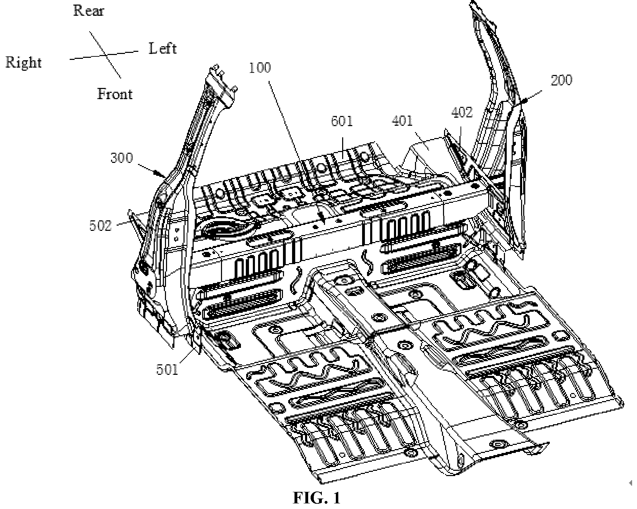

As shown in FIG. 1, a front crossbeam 100 of the rear floor located at a rear part of the vehicle body is provided according to the embodiment. Two longitudinal beams of rear floor located below the front crossbeam 100 of the rear floor are symmetrically disposed on both sides of the vehicle body, and respectively aligned with two B-pillars symmetrically disposed at the ends of the front crossbeam 100 of the rear floor, meanwhile, both ends of the front crossbeam 100 of the rear floor are also fixedly connected with the two longitudinal beams of rear floor and the two B-pillars respectively.

One of the main inventive points of this embodiment is that the position and connection relationships between the front crossbeam 100 of the rear floor, the longitudinal beams of rear floor and the B-pillars of the vehicle body, while the structural settings of the aforementioned relevant components will be described in details below. The embodiment and its referred drawings only illustrate and indicate the parts involving the front crossbeam of rear floor, the longitudinal beams of rear floor and the B-pillars. It should be noted that, except for the technical features of each part of the mentioned components in this embodiment, other parts of the vehicle body structure can refer to the present five-door or three-door vehicle bodies, which will not be repeated here.

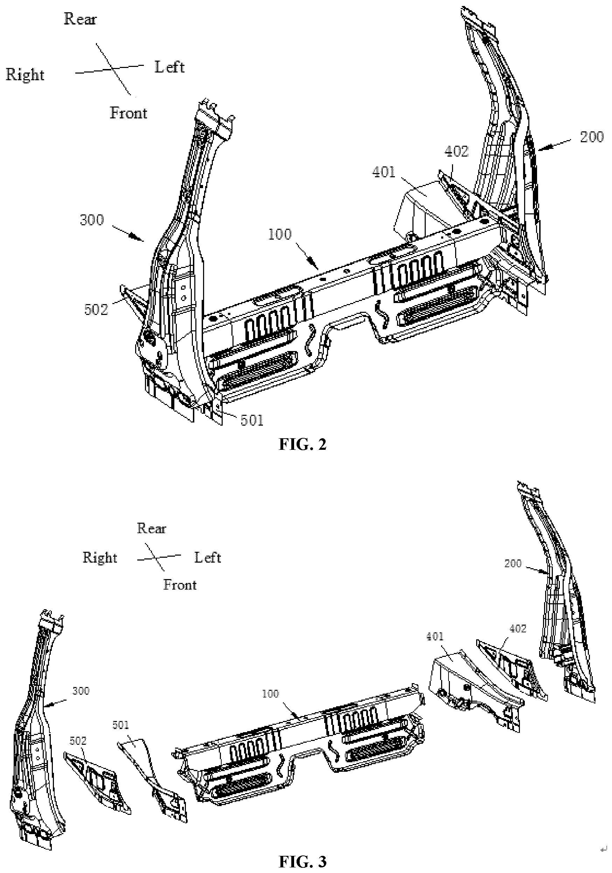

In this embodiment, as a preferred implementation form, both ends of the front crossbeam 100 of the rear floor are fixedly connected with a connecting plate respectively, while the front crossbeam of rear floor is fixedly connected with the longitudinal beams of rear floor and the B-pillars, through the connecting plates disposed at both ends of the front cross member of rear floor. Moreover, with reference to FIG. 2 and FIG. 3, in the connection between the front crossbeam 100 of the rear floor and the longitudinal beams of rear floor in this embodiment, the connecting plate at the end of the front crossbeam 100 of the rear floor is also connected with an inner plate of each of the longitudinal beams of rear floor, which is in the body of each of the longitudinal beams of rear floor. While in the connection between the front crossbeam 100 of the rear floor and the B-pillars, the connecting plates at the ends of the front crossbeam 100 of the rear floor are connected with a stiffening plate of each of the B-pillars, which is in the body of each of the B-pillar.

Based on the above description, for the convenience of description, as shown in any one of FIG. 1, FIG. 2 or FIG. 3, in this embodiment, the connecting plates on both sides of the front crossbeam 100 of the rear floor are respectively called a left connecting plate 402 and a right connecting plate 502.The B-pillar stiffening plates on both sides are respectively called a left B-pillar stiffening plate 200 and a right B-pillar stiffening plate 300. The inner plates of the longitudinal beams of rear floor on both sides are respectively called an inner plate of the longitudinal beam of longitudinal beam of rear floor 401 and an inner plate of the longitudinal beam of longitudinal beam of rear floor 501. The connecting plates on both sides, the B-pillar stiffening plates on both sides, and the inner plates of the longitudinal beams of rear floor of on both sides are the same in structure. The connecting plates, the B-pillar stiffening plates and the inner plates of the longitudinal beams of rear floor are respectively introduced hereinafter through the description of the left connecting plate 402, the left B-pillar stiffening plate 200 and the inner plate of the longitudinal beam of rear floor 401.

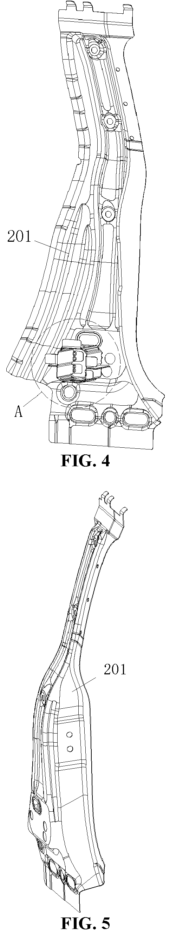

The structure of the left B-pillar stiffening plate 200 in this embodiment is shown in FIG. 4 and FIG. 5, which is mainly formed by a B-pillar stiffening plate body 201. The B pillar stiffening plate body 201 is a strip-shaped sheet metal part with a small upper cross section and a large lower cross section, which is similar to an overall configuration of the B-pillar in the vehicle. Moreover, the B-pillar stiffening plate body 201 has an approximately U-shaped cross section, and it is provided with stiffening ribs extending along a height direction thereof and a flanging at an edge at the same time, to improve the structural strength.

As a preferred implementation form, in this embodiment, a supporting part is fixedly connected with the connecting plates which is fixedly connected in each of the B pillar stiffening plates, and the supporting part is aligned with the front crossbeam 100 of the rear floor. Through the design of the supporting part above, the connection strength between each of the B-pillar stiffening plates and the connecting plates, which represents the connection strength between the B pillar stiffening plates and the front crossbeam 100 of the rear floor can be further improved, and it is more conducive to the effective transferring of a side collision impact force applied to the any one of the B-pillars to the front crossbeam 100 of the rear floor. The embodiment is only as a preferred way to implement.

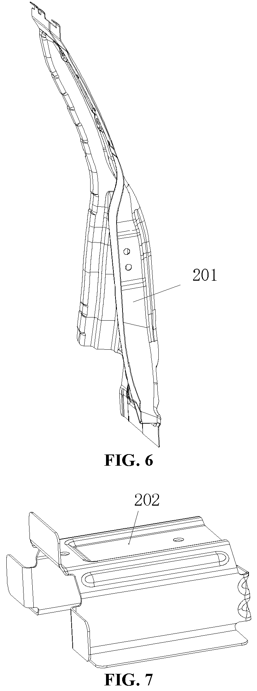

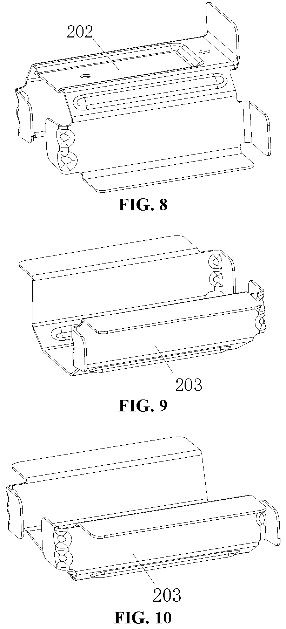

As for the supporting part disposed between the B-pillar stiffening plates and the connecting plates, the side of the left B pillar stiffening plate 200 is taken as an example. As shown in FIG. 7 to FIG. 10, the supporting part has an annular cross section, and comprises an upper supporting plate 202 and a lower supporting plate 203 which are fastened and fixedly connected together. The upper supporting plate 202 is a U-shaped plate with downward opening, and the lower supporting plate 203 is a U-shaped plate with upward opening, and the openings of the upper supporting plate 202 and the lower supporting plate 203 are opposite, and can be fastened and fixedly connected together, so that the above annular cross section is formed.

In addition, there are some side flanging respectively applied to both opposite sides of the opening ends, of the upper supporting plate 202 and the lower supporting plate 203, in order to facilitate the connection between the upper supporting plate 202 and the lower supporting plate 203 after fastening. When the upper supporting plate 202 and the lower supporting plate 203 are fastened, the flanging on both sides are attached together, and then the fixed connection between the upper supporting plate 202 and the lower supporting plate 203 can be realized by welding. In addition to the flanging structure used to fixedly connect between the upper supporting plate 202 and the lower supporting plate 203, in this embodiment, the flanging is also formed at both ends of the upper support plate 202 and the lower support plate 203 respectively, and the flanging applied to the ends of the upper supporting plate 202 and the lower supporting plate 203 may both have outward flanging and inward flanging. The outward flanging and the inward flanging may be selected according to the connection modes between the supporting parts and the left B pillar stiffening plate 200 and the left connecting plate 402.

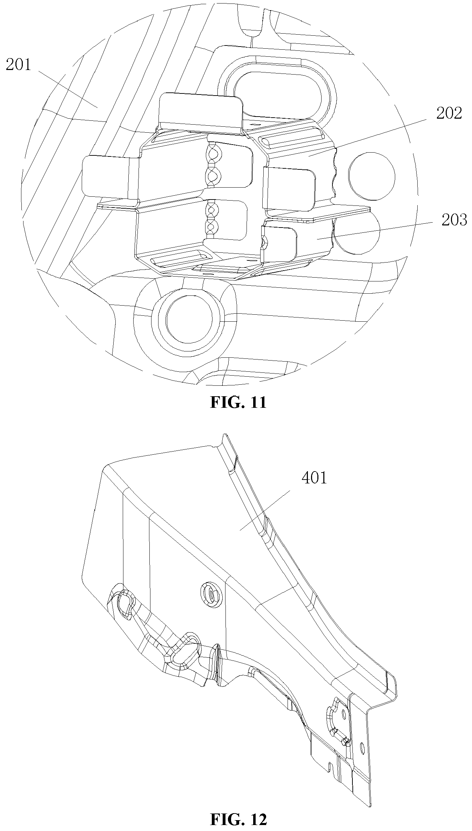

Specifically, as shown in FIG. 11, it may be selected that the flanging of the upper supporting plate 202 and the lower support plate 203 in the supporting parts at one end connected with the left B-pillar stiffening plate are both inward flanging, while the flanging at the end connected with the left connecting plate 402 are both outward flanging. The structural features of the B-pillar stiffening plate body 201 may be fit with the disposing of flanging, and the connection between the supporting part and the B-pillar stiffening plate body 201 can be facilitated, and meanwhile, the connection between the supporting parts and the left connecting plate 402 can also be facilitated based on the features of the left connecting plate 402. In addition, the flanging structure on the supporting part may also be disposed in other arbitrary ways of course, as long as the flanging structure can facilitate the connection between the components and improve the connection reliability thereof. The embodiment is just an example as a way to implement.

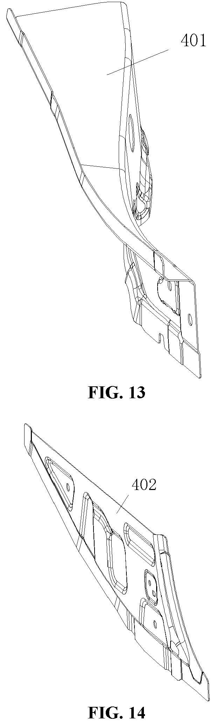

In this embodiment, the structure of the inner plate of the left longitudinal beam of rear floor 401 is shown in FIG. 12 and FIG. 13, the cross section of which is approximately right-angled. The disposing of the cross section is that, the cross section at one end is larger, the cross section is gradually smaller as heading to the other end, and the edge of the inner plate is also provided with a flanging structure to increase the structural strength thereof. The structure of the left connecting plate 402 is shown in FIG. 14, which is a roughly flat plate-like structure with a plurality of stiffening rib grooves on the end faces thereof, and it is also a structure with one end smaller and gradually larger as heading to the other end. In specific connection, a bottom edge of the left connecting plate 402 and the inner plate of the left longitudinal beam of rear floor 401 are fixedly connected together by welding, the left B-pillar stiffening plate 200 and the supporting part disposed in the left B-pillar stiffening plate 200 are fixedly connected with one side of the left connecting plate 402 by welding, and the front crossbeam 100 of the rear floor is fixedly connected with the other side of the left connecting plate 402 by welding opposite to the left B-pillar stiffening plate 200.

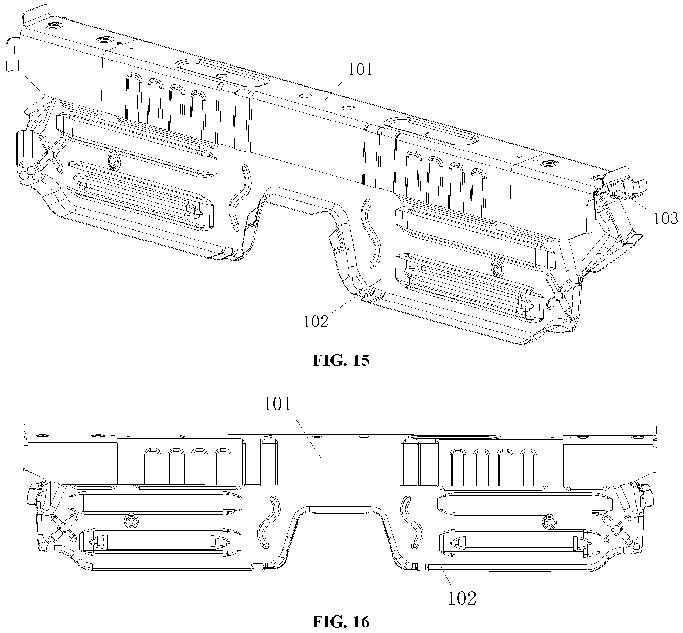

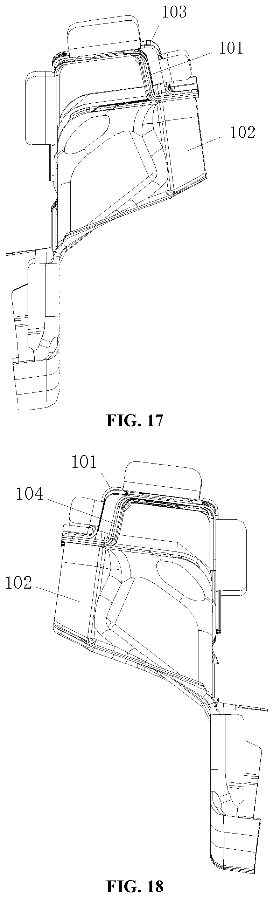

As shown in FIG. 15 to FIG. 19, the front crossbeam of rear floor according to this embodiment specifically comprises a front crossbeam body and a front crossbeam cover plate 102 which is fixedly connected with the crossbeam body 101, and a cavity is enclosed between the front crossbeam body 101 and the front crossbeam cover plate 102 due to the fixed connection, and the cavity extends along a lengthwise direction of the front crossbeam 100 of the rear floor.

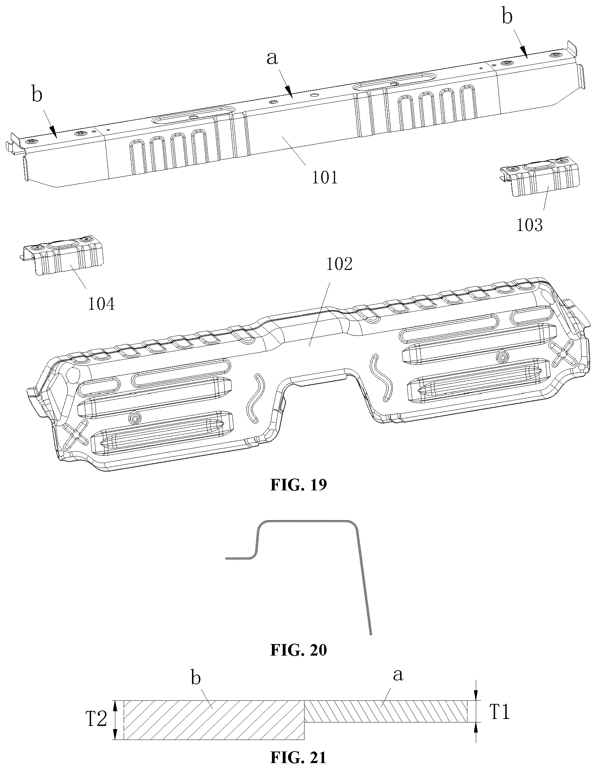

Specifically, as shown in FIG. 20, the cross section of the front crossbeam body 101 according to this embodiment is roughly an n shape with two outward flanging, while the front crossbeam cover plate 102 is an integral plate-like structure. When the front crossbeam cover plate 102 is connected with the front crossbeam body 101, one side of the front crossbeam cover plate 102 covers the bottom opening of the front crossbeam body 101, thereby enclosing the so-called cavity, and the other side of the front crossbeam cover plate 102 extends from the position of the front crossbeam 100 of the rear floor to a front direction of the vehicle body, and it is finally fixedly connected with the front floor in the vehicle body.

In this embodiment, the side of the front crossbeam cover plate 102 extending to the floor of the vehicle body is also formed with a gap to accommodate a middle channel in the vehicle body. However, it should be noted that both ends of the front crossbeam body 101 are also respectively formed with outward flanging, and the front crossbeam 100 of the rear floor is welded and fixedly connected with the connecting plates at both sides through the flanging at the ends of the front crossbeam body 101. In this case, through the connecting plates, and the front crossbeam 100 of the rear floor and the supporting parts in the B-pillars located at both sides of the connecting plates respectively, a three-layer welding structure can be formed at this position, so that the connection strength can be greatly improved.

In this embodiment, in order to improve the connection reliability between the front crossbeam of rear floor and the connecting plates on both sides, the front crossbeam stiffening plates disposed in the cavity may be fixedly connected with both ends of the front crossbeam 100 of the rear floor respectively. The front crossbeam stiffening plates at both ends may be called a front crossbeam left stiffening plate 103 and a front crossbeam right stiffening plate 104 respectively, meanwhile, a cross section of each of the front crossbeam stiffening plates is the same as that of the front crossbeam body, the shapes of both of the cross sections are similar to an n shape with two outward flanging. Moreover, the front crossbeam stiffening plates at both ends may also be fixedly connected in the front crossbeam 100 of the rear floor by welding. The embodiment is just a preferred way to implement.

In this embodiment, the cross sections of the front crossbeam body 101 and the front crossbeam stiffening plates at both ends are similar to an n shape with two outward flanging, so that all components can be obtained by simple bending processes, and the material utilization rate may be greatly improved to over 90% in comparison to the present drawing process, thereby reducing the development cost of the front crossbeam 100 of the rear floor.

In order to reduce the weight of the front crossbeam 100 of the rear floor, as to facilitate the consideration of lightweight body of the vehicle, as shown in FIG. 21, the front crossbeam body 101 may be mainly formed by end plate bodies b at both ends, and a middle plate a which is fixedly connected between the end plate bodies b at both ends by laser welding of tailored blanks Meanwhile, a thickness of the middle plate body a is smaller than that of the end plate bodies b (that is, T1<T2), while the front crossbeam stiffening plate is fixedly connected with the end plate bodies b. According to the above design, on the premise of ensuring the strength, rigidity and side collision performance of the vehicle body, the weight reduction of the vehicle body is implemented. The embodiment is just a preferred way to implement.

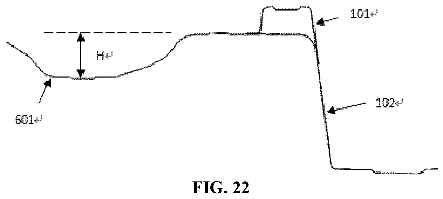

As shown in FIG. 22, in order to reduce a forming depth of a rear floor 601 in the vehicle body and make the production process of the rear floor 601 simpler, to reduce the development cost of the rear floor 601 and even the whole vehicle, as a preferred way to implement, it may be selected that the front crossbeam 100 of the rear floor may be located above the rear floor 601 in the vehicle body. In this case, through the arrangement of the relative position between the front crossbeam 100 of the rear floor and the rear floor 601, a height drop H of the rear floor 601 is smaller, thus achieving one of the above-mentioned objects of simplifying the production process and reducing the development cost.

In conclusion, the vehicle body structure of the present application is disposed by means of aligning the front crossbeam 100 of rear floor with the B-pillars on both sides and causing the front crossbeam 100 of the rear floor and the B-pillars and the longitudinal beams of rear floor to be fixedly connected together; if the vehicle has a side collision, the impact force is directly transmitted to the other side of the vehicle body by means of the front crossbeam 100 of rear floor, thus reducing the decomposition of the impact force during the process of transferring, effectively transferring the impact force and reducing the absorption of the impact force by the floor, and thus reducing injury to passengers and protecting the safety of the passengers, so that the vehicle body structure has excellent practicability.

The embodiments of the present application also disclose a vehicle, comprising the vehicle body structure mentioned above.

Those described above are merely preferred embodiments of the application, and the scope of protection of the invention is limited solely by the appended claims.

## Claims

1. A vehicle body structure having a front crossbeam (100) of a rear floor located at a rear part of a vehicle body, wherein two longitudinal beams of the rear floor are located below the front crossbeam (100) of the rear floor and symmetrically disposed on both sides of the vehicle body, and two B-pillars are symmetrically disposed on both sides of the vehicle body and respectively aligned with end parts of the front crossbeam (100) of the rear floor; both ends of the front crossbeam (100) of the rear floor are fixedly connected with the two longitudinal beams of the rear floor and the two B-pillars respectively,
wherein each of both ends of the front crossbeam (100) of the rear floor is fixedly connected with a connecting plate respectively, and the front crossbeam (100) of the rear floor is fixedly connected with the longitudinal beams of the rear floor and the B-pillars through the connecting plates, and
wherein each of the connecting plates is connected with a B-pillar stiffening plate in each of the B-pillars,
**characterized in that**
a supporting part is fixedly connected with the connecting plate, and aligned with the front crossbeam (100) of the rear floor, in the B-pillar stiffening plate, and
wherein the supporting part has an annular cross section, and comprises an upper supporting plate (202) and a lower supporting plate (203) which are fastened and fixedly connected together, and at least one end of the upper supporting plate (202) or at least one end of the lower supporting plate (203) is provided with an outward/ inward flanging.

2. The vehicle body structure according to claim 1, wherein each of the connecting plates is connected with an inner plate of the longitudinal beam of the rear floor.

3. The vehicle body structure according to claim 1, wherein the front crossbeam (100) of the rear floor is located on a rear floor (601) in the vehicle body.

4. The vehicle body structure according to any one of claims 1 to 3, wherein the front crossbeam (100) of the rear floor comprises a front crossbeam body (101), a front crossbeam cover plate (102) fixedly connected with the crossbeam body (101), and a cavity is formed due to the fixed connection between the front crossbeam body (101) and the front crossbeam cover plate (102), and the cavity extends along a lengthwise direction of the front crossbeam (100) of the rear floor.

5. The vehicle body structure according to claim 4, wherein front crossbeam stiffening plates disposed in the cavity are fixedly connected at both ends of the front crossbeam (100) of the rear floor, and a cross section of each of the front crossbeam stiffening plate is the same as that of the front crossbeam body (101), the shapes is similar to an n shape with two outward flanging.

6. The vehicle body structure according to claim 5, wherein the front crossbeam body (101) comprises end plate bodies (b) located at both ends of the front crossbeam body (101), and a middle plate body (a) fixedly connected at both ends with the end plate bodies (b) by laser welding of tailored blanks, the thickness of the middle plate body (a) is smaller than that of the end plate bodies (b), and the front crossbeam stiffening plate is fixedly connected with the end plate bodies (b).

7. A vehicle, comprising the vehicle body structure according to any one of claims 1 to 6.

## Patentansprüche

1. Fahrzeugkarosseriestruktur mit einem vorderen Querträger (100) eines hinteren Bodens, welcher sich an einem hinteren Teil einer Fahrzeugkarosserie befindet, wobei sich zwei Längsträger des hinteren Bodens unter dem vorderen Querträger (100) der hinteren Bodens befinden und symmetrisch auf beiden Seiten der Fahrzeugkarosserie angeordnet sind, und zwei B-Säulen symmetrisch auf beiden Seiten der Fahrzeugkarosserie angeordnet sind und jeweils mit Endteilen des vorderen Querträgers (100) des hinteren Bodens ausgerichtet sind, wobei beide Enden des vorderen Querträgers (100) des hinteren Bodens fest mit jeweils den beiden Längsträgern des hinteren Bodens und den beiden B-Säulen verbunden sind,
wobei jedes der beiden Enden des vorderen Querträgers (100) des hinteren Bodens jeweils fest mit einer Verbindungsplatte verbunden ist, und der vordere Querträger (100) des hinteren Bodens durch die Verbindungsplatten fest mit den Längsträgern des hintere Bodens und den B-Säulen verbunden ist, und
wobei jede der Verbindungsplatten mit einer B-Säulenversteifungsplatte in jeder der B-Säulen verbunden ist,
**dadurch gekennzeichnet, dass**
ein Stützteil fest mit der Verbindungsplatte verbunden ist, und mit dem vorderen Querträger (100) des unteren Bodens in der B-Säulenversteifungsplatte ausgerichtete ist, und
wobei das Stützteil einen ringförmigen Querschnitt aufweist und eine obere Stützplatte (202) und eine untere Stützplatte (203) aufweist, welche aneinander befestigt und fest miteinander verbunden sind, und mindestens ein Ende der oberen Stützplatte (292) oder mindestens ein Ende der unteren Stützplatte (203) mit auswärts/einwärts gerichteten Flanschen versehen ist.

2. Fahrzeugkarosseriestruktur nach Anspruch 1, bei welcher jede der Verbindungsplatten mit einer inneren Platte des Längsträgers des hinteren Bodens verbunden ist.

3. Fahrzeugkarosseriestruktur nach Anspruch 1, bei welcher sich der vordere Querträger (100) des unteren Bodens auf einem hinteren Boden (601) in der Fahrzeugkarosserie befindet.

4. Fahrzeugkarosseriestruktur nach einem der Ansprüche 1 bis 3, bei welcher der vordere Querträger (100) des hinteren Bodens einen vorderen Querträgerkörper (101), eine Abdeckplatte (102) für den vordere Querträger, die fest mit dem Querträgerkörper (101) verbunden ist, und ein Hohlraum aufgrund der festen Verbindung zwischen dem vorderen Querträgerkörper (101) und der Abdeckplatte (102) für den vorderen Querträger gebildet ist, und sich der Hohlraum entlang einer Längsrichtung des vorderen Querträgers (100) des hinteren Bodens verbunden ist.

5. Fahrzeugkarosseriestruktur nach Anspruch 4, bei welcher in dem Hohlraum angeordnete Versteifungsplatten für den vorderen Querträger an beiden Enden des vorderen Querträgers (100) des hinteren Bodens fest verbunden sind, und ein Querschnitt jeder der Versteifungsplatten für den vorderen Querträger gleich demjenigen des vorderen Querträgerkörpers (101) ist, wobei die Form der Form eines n mit zwei auswärts gerichteten Flanschen ähnlich ist.

6. Fahrzeugkarosserie nach Anspruch 5, bei welcher der vordere Querträgerkörper (101) Endplattenkörper (b), welche sich an beiden Enden des vorderen Querträgerkörpers (101) befinden, und einen Mittelplattenkörper (a) aufweist, der an beiden Enden fest mit den Endplattenkörpern (b) durch Laserschweißen von Tailored Blanks verbunden ist, die Dicke des Mittelplattenkörpers (a) geringer als diejenige der Endplattenkörper (b) ist, und die Versteifungsplatte für den vorderen Querträger fest mit den Endplattenkörpern (b) verbunden ist.

7. Fahrzeug mit der Fahrzeugkarosseriestruktur nach einem der Ansprüche 1 bis 6.

## Revendications

1. Structure de carrosserie ayant une traverse avant (100) d'un plancher arrière se trouvant au niveau d'une partie arrière d'une carrosserie, dans laquelle deux longerons du plancher arrière sont situés sous la traverse avant (100) du plancher arrière et disposés symétriquement de part et d'autre de la carrosserie, et deux montants B sont disposés symétriquement sur les deux côtés de la carrosserie et alignés respectivement avec des parties d'extrémité de la traverse avant (100) du plancher arrière; les deux extrémités de la traverse avant (100) du plancher arrière sont reliées de manière fixe aux deux longerons du plancher arrière et aux deux montants B respectivement,
dans laquelle chacune des deux extrémités de la traverse avant (100) du plancher arrière est reliée de manière fixe à une plaque de liaison respectivement, et la traverse avant (100) du plancher arrière est reliée de manière fixe aux longerons du plancher arrière et aux montants B par l'intermédiaire des plaques de liaison, et
dans laquelle chacune des plaques de liaison est reliée à une plaque de renfort de montant B dans chacun des montants B,
**caractérisée en ce que**
une pièce de support est reliée de manière fixe à la plaque de liaison, et alignée avec la traverse avant (100) du plancher arrière, dans la plaque de renfort de montant B, et
dans laquelle la pièce de support a une section annulaire, et comprend une plaque de support supérieure (202) et une plaque de support inférieure (203) qui sont fixées et reliées de manière fixe entre elles, et au moins une extrémité de la plaque de support supérieure (202) ou au moins une extrémité de la plaque de support inférieure (203) est munie d'un rebord extérieur/intérieur.

2. Structure de carrosserie selon la revendication 1, dans laquelle chacune des plaques de liaison est reliée à une plaque intérieure du longeron du plancher arrière.

3. Structure de carrosserie selon la revendication 1, dans laquelle la traverse avant (100) du plancher arrière est située sur un plancher arrière (601) de la carrosserie.

4. Structure de carrosserie selon l'une quelconque des revendications 1 à 3, dans laquelle la traverse avant (100) du plancher arrière comprend un corps de traverse avant (101), une plaque de recouvrement de traverse avant (102) reliée de manière fixe au corps de traverse (101), et une cavité est formée du fait de la liaison fixe entre le corps de traverse avant (101) et la plaque de recouvrement de traverse avant (102), et la cavité s'étend dans le sens de la longueur de la traverse avant (100) du plancher arrière.

5. Structure de carrosserie selon la revendication 4, dans laquelle des plaques de renfort de traverse avant disposées dans la cavité sont reliées de manière fixe aux deux extrémités de la traverse avant (100) du plancher arrière, et une section transversale de chacune de la plaque de renfort de traverse avant est la même que celle du corps de traverse avant (101), les formes sont similaires à une forme de n avec deux rebords extérieurs.

6. Structure de carrosserie selon la revendication 5, dans laquelle le corps de traverse avant (101) comprend des corps de plaque d'extrémité (b) situés aux deux extrémités du corps de traverse avant (101), et un corps de plaque intermédiaire (a) relié de manière fixe aux deux extrémités aux corps de plaque d'extrémité (b) par soudage laser de flans sur mesure, l'épaisseur du corps de plaque intermédiaire (2) est plus petite que celle des corps de plaque d'extrémité (b), et la plaque de renfort de traverse avant est reliée de manière fixe aux corps de plaque d'extrémité (b).

7. Véhicule comprenant la structure de carrosserie selon l'une quelconque des revendications 1 à 6.
